# DEMANDE DE BREVET EUROPEEN

(11) **EP 2 602 014 A1**
(43) Date de publication de la demande: **12.06.2013**
(21) Numéro de dépôt: 12196086.8
(22) Date de dépôt: 07.12.2012
(51) Int. Cl.: B01D 29/01, E03B 3/02, B01D 29/05, B01D 35/027, C02F 1/00

(54) **Dispositif et système de filtration d'eau de pluie**

(30) Priorité: 09.12.2011 FR 1103789
(71) Demandeur: Etablissements Georges David, 01100 Oyonnax (FR)
(72) Inventeur: Babaz, Michel, 05100 BRIANCON (FR)
(74) Mandataire: Myon, Gérard Jean-Pierre

(57) **Abrégé**

Ce dispositif de filtration d'eau de pluie comprend un filtre (4) comportant au moins une entrée (8) raccordée à un conduit d'entrée (9) du filtre et à un collecteur de l'eau de pluie (10), au moins une sortie (13) raccordée à un conduit de sortie (14), et un élément filtrant (7), dans lequel le filtre (4) comporte en outre des premier et deuxième compartiments (5, 6) séparés par l'élément filtrant (7), ladite entrée (8) étant formée dans le premier compartiment (5), et ladite sortie (13) étant formée dans le deuxième compartiment (6) et au-dessus de ladite entrée (8). Le filtre (4) comporte en outre une ouverture inférieure (19) située sur une face inférieure (18) du premier compartiment (5) et un couvercle inférieur (20) configuré pour obstruer l'ouverture inférieure (19) dans une position fermée.

## Description

### Domaine technique de l'invention

L'invention est relative à un dispositif et à un système de filtration d'eau de pluie.

### État de la technique

Actuellement, on utilise des systèmes de récupération d'eau de pluie destinés à être installés chez des particuliers et qui peuvent facilement s'adapter aux gouttières qui collectent l'eau de pluie. Ces systèmes de récupération comprennent généralement un conduit principal qui se raccorde par une première extrémité à la gouttière et par une deuxième extrémité à un conduit secondaire. Le conduit secondaire est également raccordé à une cuve servant de réservoir pour récupérer l'eau de pluie. Mais ces systèmes de récupération peuvent être obstrués par des feuilles et autres éléments indésirables se trouvant dans la gouttière, tels des brindilles, insectes, salissures, qui peuvent empêcher le recueillement de l'eau de pluie. En outre, certains de ces éléments peuvent se retrouver dans la cuve, ce qui peut entraîner une dégradation de la qualité de l'eau de pluie recueillie.

Un système de récupération d'eau de pluie peut comporter un filtre situé dans la gouttière en amont d'un conduit unique raccordé à la cuve. Mais ce filtre nécessite de modifier la gouttière et rend l'installation du système de récupération difficile à mettre en oeuvre chez un particulier.

Un autre système de récupération d'eau de pluie peut être équipé d'un filtre qui est disposé dans le sol, à la base de la gouttière et en amont de la cuve. Le filtre comprend une grille amovible en forme de panier placé dans le fond du filtre permettant ainsi de filtrer l'eau. Par ailleurs, le filtre comporte un conduit d'entrée raccordée à la base de la gouttière, un premier conduit de sortie du filtre situé en aval du panier et au-dessous de l'entrée du filtre et comporte en outre un second conduit de sortie situé au-dessus du panier et au même niveau que celui du conduit d'entrée. Le deuxième conduit de sortie permet d'évacuer un trop plein d'eau dans le filtre. En effet, des feuilles ont tendance à colmater le fond du panier et obstruer le premier conduit de sortie du filtre.

Il est connu du document EP-A-1 522 525, un système de filtration d'eau de pluie que l'on peut installer chez un particulier et qui peut facilement s'adapter aux gouttières qui collectent l'eau de pluie. Ce système de filtration d'eau de pluie comprend un filtre divisé en deux compartiments, ces deux compartiments étant séparés par deux jeux de plaques disposées horizontalement. Un ensemble de déionisation ou d'absorption est par ailleurs installé entre ces deux jeux de plaques afin de procéder au traitement de l'eau de pluie. L'eau de pluie, arrivant par la conduit d'entrée, s'accumule dans le premier compartiment puis traverse l'élément filtrant afin d'arriver dans le second compartiment et s'écouler par le conduit de sortie. Or, l'eau de pluie circulant dans les gouttières peut être sale, susceptible de porter des éléments indésirables tels que des insectes, des brindilles ou encore des feuilles. Ainsi, lorsque cette eau chargée en éléments indésirables rentre dans le filtre par le conduit d'entrée, les éléments indésirables se déposent, par gravité, au fond du filtre. Ainsi, après une longue période de fonctionnement, les éléments indésirables peuvent s'amonceler au fond du filtre et obstruer l'ouverture du conduit d'entrée empêchant ainsi le système de filtration de fonctionner. Il est alors nécessaire, plusieurs fois durant la durée de fonctionnement du système de filtration d'eau pluie, de retirer les éléments indésirables amoncelés au fond du premier compartiment. Or, le système de filtration d'eau de pluie décrit dans ce document ne prévoit rien à cet effet et il est nécessaire de démanteler certaines pièces du système de filtration, notamment les jeux de plaques horizontales, afin de pouvoir retirer les éléments indésirables.

### Objet de l'invention

L'objet de l'invention consiste à remédier à ces inconvénients, et à réaliser un dispositif de filtration d'eau de pluie dont les opérations de maintenance soient facilitées.

A cet effet, l'invention concerne un dispositif de filtration d'eau de pluie comprenant un filtre comportant au moins une entrée raccordée à un conduit d'entrée du filtre et à un collecteur de l'eau de pluie, au moins une sortie raccordée à un conduit de sortie, et un élément filtrant, dans lequel le filtre comporte en outre des premier et deuxième compartiments séparés par l'élément filtrant, ladite entrée étant formée dans le premier compartiment, et ladite sortie étant formée dans le deuxième compartiment et au-dessus de ladite entrée, alors que le filtre comporte une ouverture inférieure située sur une face inférieure du premier compartiment et un couvercle inférieur configuré pour obstruer l'ouverture inférieure dans une position fermée.

Grâce à l'invention, on fournit un dispositif de filtration d'eau de pluie qui limite de façon efficace l'obstruction du filtre par des éléments indésirables amenés par l'eau de pluie. En effet, les éléments qui sont en contact avec la face de l'élément filtrant orientée vers l'entrée du filtre ont tendance à tomber au fond du premier compartiment sous l'effet de la gravité. En outre, les objets sont piégés dans le premier compartiment du filtre et n'empêchent pas la circulation de l'eau à travers le filtre. Le dispositif de filtration ainsi proposé est plus efficace que ceux de l'art antérieur, puisque selon l'invention les éléments indésirables sont piégés au fond d'un premier compartiment par l'effet de la gravité et non pas contre l'élément filtrant. Ces éléments indésirables sont facilement évacués en accédant au premier compartiment à travers l'ouverture inférieure.

L'élément filtrant peut être amovible et le filtre comporte des moyens de maintien pour maintenir l'élément filtrant dans une position séparant les deux compartiments.

En effet, l'élément filtrant peut, sous l'effet de la pression de l'eau qui circule dans le filtre, être déplacé vers le deuxième compartiment du filtre et les moyens de maintien permettent ainsi de maintenir l'élément filtrant dans sa position pour séparer les deux compartiments du filtre.

Le filtre peut en outre comporter une ouverture supérieure située sur une face supérieure du deuxième compartiment et un couvercle supérieur configuré pour obstruer l'ouverture supérieure dans une position fermée, et les moyens de maintien comportent une languette montée sur l'élément filtrant et s'étendant jusqu'au couvercle supérieur lorsque le couvercle supérieur est en position fermée.

L'ouverture supérieure fournit un accès à l'intérieur du filtre pour un nettoyage facile de l'élément filtrant, et la languette coopère avec le couvercle supérieur, lorsque celui-ci est fermé, afin de maintenir l'élément filtrant en position.

Avantageusement, la languette peut être située au centre de l'élément filtrant pour empêcher que ce dernier se déforme sous la pression.

Le filtre peut également avoir une forme globalement pyramidale dont la base comprend l'ouverture supérieure.

Ainsi, on peut emboîter plusieurs filtres les uns dans les autres afin de diminuer leur encombrement.

Le premier compartiment peut être positionné au-dessous du deuxième compartiment.

L'élément filtrant peut être sensiblement parallèle au fond du premier compartiment.

L'élément filtrant peut être également sensiblement incliné par rapport au fond du premier compartiment.

L'élément filtrant peut en outre être sensiblement perpendiculaire au fond du premier compartiment.

Le filtre peut comporter une fenêtre de visualisation qui est, de préférence, située sur une paroi latérale du premier compartiment.

Selon un autre aspect de l'invention, il est proposé un système de filtration d'eau de pluie comprenant un dispositif tel que défini ci-avant, et un réservoir raccordé à ladite au moins une sortie du filtre.

Selon encore un autre aspect de l'invention, il est proposé un système de filtration d'eau de pluie comprenant un réservoir et un dispositif tel que défini ci-avant intégré au réservoir.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
- la figure 1, illustre de façon schématique un mode de réalisation d'un dispositif et d'un système de filtration d'eau de pluie selon l'invention ;
- les figures 2 et 3, illustrent schématiquement d'autres modes de réalisation d'un dispositif de filtration d'eau de pluie ; et
- la figure 4, illustre schématiquement un autre mode de réalisation d'un système de filtration d'eau de pluie.

### Description détaillée

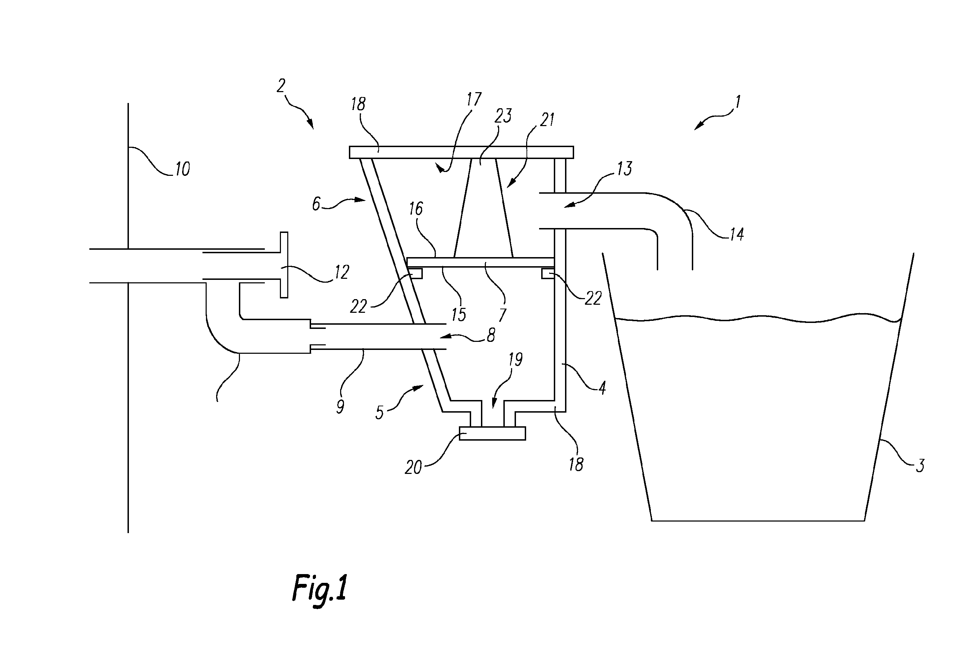

Sur les figures ci-jointes, sont représentés différents modes de réalisation de dispositifs et de systèmes de filtration d'eau de pluie en configuration d'utilisation, c'est-à-dire avec l'orientation spatiale qu'ils ont lorsqu'ils sont en service. Ainsi, les parties hautes des figures 1 à 4 sont respectivement situées au dessus des parties basses de ces figures.

Sur la figure 1, on a représenté de manière schématique une vue en coupe d'un système de filtration d'eau de pluie 1. Le système de filtration 1 comporte un dispositif de filtration 2 et un réservoir 3.

Le dispositif de filtration 2 comporte un filtre 4 qui a une forme généralement cylindrique, ou par exemple parallélépipédique, et de préférence une forme pyramidale dont la base correspond à la partie supérieure du filtre 4. Le filtre 4 comprend un premier compartiment 5, un deuxième compartiment 6, et un élément filtrant 7 séparant les deux compartiments 5, 6. Le filtre 4 peut être réalisé en matière transparente à la lumière afin de pouvoir visualiser le contenu des compartiments 5, 6.

Le filtre comporte au moins une entrée 8 raccordée à un conduit d'entrée du filtre 9. Au sens de la présente demande, une entrée est une ouverture permettant à l'eau de pénétrer dans le filtre. L'entrée 8 du filtre 4 est formée dans le premier compartiment 5 du filtre 4, par exemple au niveau d'une paroi avant du filtre 4. Le conduit d'entrée 9 est également raccordé à un collecteur d'eau de pluie 10, soit directement, soit par l'intermédiaire d'un conduit intermédiaire 11. Le collecteur 10 est par exemple une gouttière préalablement installée chez un particulier, il peut être un conduit raccordant le toit au sol. Le conduit intermédiaire 11 peut être un conduit coudé, ou non coudé, et peut comporter un robinet 12 pour ouvrir et fermer le conduit intermédiaire 11 afin de contrôler le débit d'eau circulant dans le dispositif 2. En variante, le filtre peut comporter plusieurs entrées formées dans le premier compartiment 5 et raccordées au collecteur 10, par plusieurs conduits respectifs.

Le filtre 4 comporte également au moins une sortie 13 raccordée à un conduit de sortie du filtre 14. Au sens de la présente demande, une sortie est une ouverture permettant à l'eau de sortir du filtre. La sortie 13 est formée dans le deuxième compartiment 6, par exemple au niveau d'une paroi arrière du filtre 4. Par ailleurs, la sortie 13 est située au-dessus de l'entrée 8 ou des entrées du filtre 4 en configuration normale d'utilisation du filtre 4. Ceci découle du fait que le premier compartiment 5 est situé en dessous du deuxième compartiment et est fonctionnellement important puisque cette disposition particulière du conduit d'entrée 9 par rapport au conduit de sortie 14 permet d'utiliser la gravité comme un séparateur naturel entre l'eau de pluie et les éléments indésirables. En effet, les éléments indésirables tels que des insectes ou des brindilles ont une densité supérieure à celle de l'eau et tombent au fond du premier compartiment 5. Le conduit de sortie 14 est destiné à acheminer l'eau de pluie circulant dans le filtre 4 vers le réservoir 3. Le conduit de sortie 14 peut être coudé, ou non coudé. En outre, le filtre 4 peut comporter plusieurs sorties pour évacuer l'eau de pluie vers le réservoir 3 ou de façon générale vers l'extérieur du filtre 4, comme par exemple en direction du sol. Les sorties du filtre sont également formées dans le deuxième compartiment 6 et au-dessus de l'entrée 8 ou des entrées du filtre 4 en configuration d'utilisation.

On note 18 le fond du filtre 4, c'est-à-dire une paroi qui délimite une face inférieure du premier compartiment 5. Il ressort des explications qui précèdent que la distance mesurée verticalement entre l'une des sorties 8 et le fond 18 est inférieure à la distance, également mesurée verticalement, entre l'une des sorties 13 et ce fond. On entend par « mesurée verticalement » une mesure effectuée selon une hauteur lorsque le filtre 4 est en configuration d'utilisation.

L'eau de pluie descend dans le collecteur 10 par gravité, et est centrifugée le long des parois internes du collecteur 10, ce qui permet d'en récupérer une partie grâce au conduit intermédiaire 11. Puis, la partie d'eau de pluie récupérée circule dans le conduit d'entrée 9 du filtre 4, puis dans le premier compartiment 5 du filtre 4 par l'entrée 8. Dans le filtre 4, l'eau de pluie circule depuis le premier compartiment 5 vers le deuxième compartiment 6, sous l'effet de la pression de l'eau centrifugée dans le collecteur 10, et circule à travers l'élément filtrant 7. En particulier, l'eau de pluie circulant dans le filtre 4 traverse une première face 15 de l'élément filtrant, puis une deuxième face 16 de l'élément filtrant 7. De manière générale, la première face 15 est globalement orientée vers l'entrée 8 ou les entrées du filtre 4, et la deuxième face 16 est globalement orientée vers la sortie 13 ou les sorties du filtre 4. Ainsi, les éléments amenés par l'eau de pluie dans le premier compartiment 5, ne franchissent pas l'élément filtrant 7 et ont tendance à rester au fond du premier compartiment 5 sans colmater l'élément filtrant 7. En cas de forte pression, lors de pluie abondante, certains éléments peuvent être au contact de la première face 15 de l'élément filtrant 7, mais le dispositif de filtration reste plus efficace que ceux de l'art antérieur car l'effet de la gravité a tendance à retenir les éléments au fond du premier compartiment 5, à la différence de certains matériels de l'état de la technique où les éléments indésirables sont plaqués par gravité contre la surface supérieure de l'élément filtrant car celle-ci est située au-dessous de l'entrée du filtre.

Afin de piéger les éléments indésirables dans le premier compartiment 5, l'élément filtrant 7 peut être monté fixe ou amovible au sein du filtre 4 de manière à séparer les deux compartiments 5, 6. Selon un mode de réalisation préféré, l'élément filtrant 7 est amovible, et le filtre 4 comporte des moyens de maintien 21 pour maintenir l'élément filtrant 7 dans sa position de séparation des deux compartiments 5, 6.

L'élément filtrant 7 peut adopter plusieurs positions au sein du filtre 4. Par exemple, il peut être incliné par rapport au fond du premier compartiment 5. Dans un mode de réalisation préféré, tel qu'illustré à la figure 1, l'élément filtrant 7 peut encore être sensiblement parallèle au fond du premier compartiment 5, et dans ce cas le premier compartiment 5 est situé au-dessous du deuxième compartiment 6.

En outre, le filtre 4 peut comporter une ouverture supérieure 17 pour permettre un accès à l'élément filtrant 7 afin de le nettoyer ou pour le changer. Le filtre 4 comporte un couvercle supérieur 18 pour fermer l'ouverture supérieure 17. Par exemple, les moyens de maintien 21 peuvent comprendre des butées 22 formées sur la paroi interne du filtre 4 et sur lesquelles est monté l'élément filtrant 7. L'élément filtrant 7 comporte une languette 23 montée fixe sur sa deuxième face 16 et s'étendant jusqu'au couvercle supérieur 18 lorsque ce dernier est en position fermée. La languette 23 offre un moyen de préhension de l'élément filtrant 7 pour l'extraire facilement du filtre 4, et coopère avec le couvercle supérieur 18 afin de maintenir l'élément filtrant 7 en appui contre les butées 22.

Le filtre 4 comporte une ouverture inférieure 19 ménagée dans le fond 18 et un couvercle inférieur 20 prévu pour fermer l'ouverture 19. L'ouverture inférieure 19 est située sur la face inférieure du premier compartiment 5 afin de pouvoir retirer facilement les éléments indésirables piégés dans le premier compartiment 5, sans avoir à démonter l'élément filtrant 7. Par ailleurs, l'ouverture inférieure 19 permet avantageusement de pouvoir évacuer facilement l'eau contenue dans le premier compartiment. En effet, il convient parfois vider le filtre 4.

Avantageusement, le filtre 4 peut comprendre une fenêtre de visualisation transparente, non représentée sur la figure 1 à des fins de simplification, pour visualiser l'intérieur du filtre 4. La fenêtre de visualisation est de préférence située sur une paroi latérale du premier compartiment 5 du filtre 4 pour visualiser les éléments indésirables piégés.

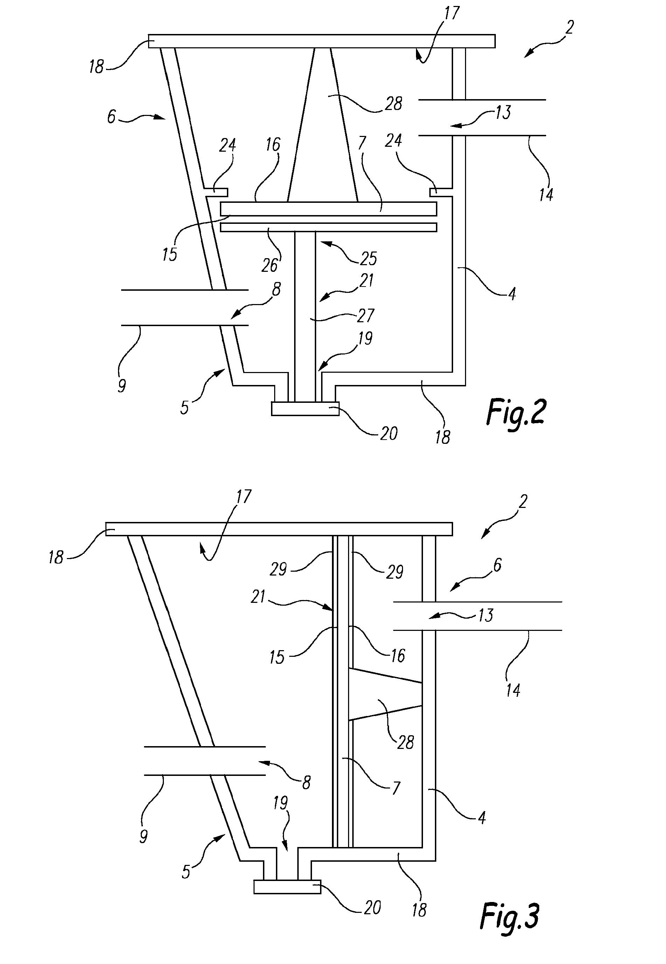

Dans les deuxième, troisième et quatrième modes de réalisation représentés aux figures 2 à 4, les éléments analogues à ceux du premier mode de réalisation portent les mêmes références. Dans ces modes de réalisation, les sorties 13 du filtre 4 sont situées au dessus de leurs entrées 8 et une ouverture inférieure 19 est prévue dans le fond 18 de chaque filtre 4, ce qui permet d'accéder au premier compartiment 5 pour retirer des éléments indésirables, sans avoir à démonter l'élément filtrant 7.

Dans ce qui suit, on décrit principalement ce qui distingue chacun de ces modes de réalisation du premier mode de réalisation.

Selon le mode de réalisation illustré à la figure 2, l'élément filtrant 7 est amovible et les moyens de maintien 21 comprennent des butées supérieures 22 formées sur la paroi interne du filtre 4 et sur lesquelles l'élément filtrant 7 est monté en appui. Les moyens de maintien 21 comprennent en outre un ensemble d'appuis 25 muni d'un premier appui 26 pour maintenir les bords de l'élément filtrant 7 contre les butées supérieures 24, et d'un deuxième appui 27 monté sur le premier appui 26 et contre le fond du premier compartiment 5, par exemple contre le couvercle inférieur 20. Par ailleurs, le premier appui 26 est traversant, de préférence en son centre, pour le passage de l'eau depuis le premier compartiment 5 vers le deuxième compartiment 6. L'élément filtrant 7 peut en outre comporter une butée de renfort 28 montée fixe sur sa deuxième face 16 et s'étendant jusqu'au couvercle supérieur 18 lorsque ce dernier est en position fermée. La butée de renfort 28 peut avoir une forme générale de languette pour offrir un moyen de préhension de l'élément filtrant 7. La butée de renfort 28 coopère avec le couvercle supérieur 18 afin d'empêcher l'élément filtrant 7 de se déformer sous la pression.

Selon un autre mode de réalisation illustré à la figure 3, l'élément filtrant 7 peut encore être positionné sensiblement perpendiculaire au fond du premier compartiment 5, et dans ce cas le premier compartiment 5 est situé en avant du deuxième compartiment 6. Dans ce mode de réalisation, les moyens de maintien 21 comportent des glissières 29 formées sur les parois internes latérales du filtre 4. Le filtre 4 peut également comprendre une butée de renfort 28, montée entre l'élément filtrant 7 et la paroi interne arrière du filtre 4, afin d'empêcher l'élément filtrant 7 de se déformer sous la pression.

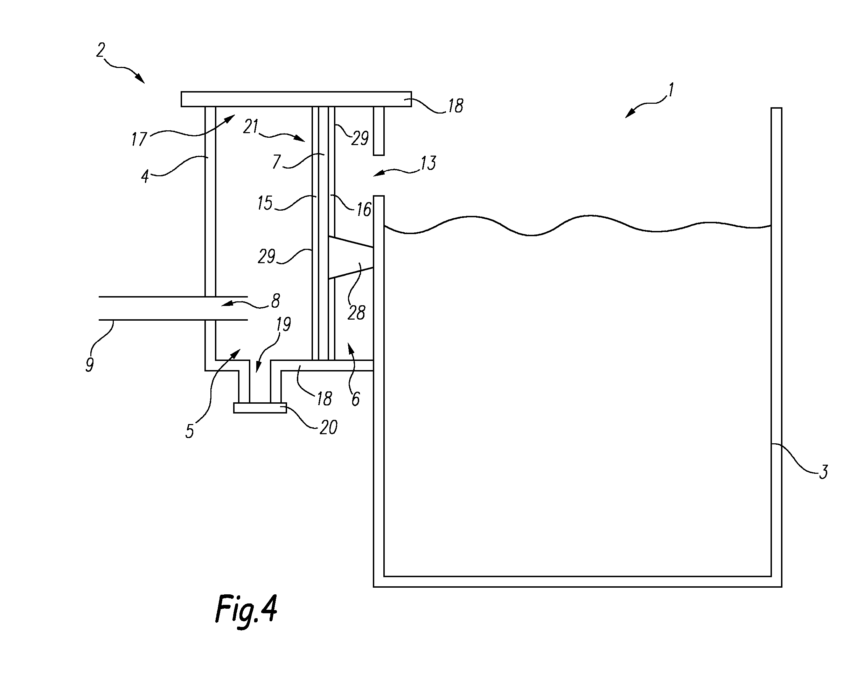

Sur la figure 4, on a illustré un autre mode de réalisation d'un système de filtration d'eau de pluie 1, dans lequel le dispositif de filtration 2 est intégré au réservoir 3. Par exemple, la paroi arrière du filtre peut être formée en partie par une paroi du réservoir 3. Ainsi, la sortie 13 du filtre 4 est formée dans la paroi du réservoir 3.

Ainsi, on fournit un dispositif de filtration efficace, simple à réaliser, et particulièrement adapté pour une installation chez un particulier. Un tel dispositif évite d'avoir à modifier de manière significative les collecteurs d'eau de pluie des usagers. Un tel dispositif de filtration offre également la possibilité de retenir les éléments indésirables dans une partie inférieure du filtre située au-dessous de l'élément filtrant, ce qui limite avantageusement le colmatage du filtre par l'effet de la gravité, et d'y accéder aisément pour nettoyer le filtre.

## Revendications

1. Dispositif de filtration d'eau de pluie comprenant un filtre (4) comportant au moins une entrée (8) raccordée à un conduit d'entrée (9) du filtre et à un collecteur de l'eau de pluie (10), au moins une sortie (13) raccordée à un conduit de sortie (14), et un élément filtrant (7), dans lequel le filtre (4) comporte en outre des premier et deuxième compartiments (5, 6) séparés par l'élément filtrant (7), ladite entrée (8) étant formée dans le premier compartiment (5), et ladite sortie (13) étant formée dans le deuxième compartiment (6) et au-dessus de ladite entrée (8), **caractérisé en ce que** le filtre (4) comporte une ouverture inférieure (19) située sur une face inférieure (18) du premier compartiment (5) et un couvercle inférieur (20) configuré pour obstruer l'ouverture inférieure (19) dans une position fermée.

2. Dispositif selon la revendication 1, dans lequel l'élément filtrant (7) est amovible et le filtre (4) comporte des moyens de maintien (21) pour maintenir l'élément filtrant (7) dans une position séparant les deux compartiments (5, 6) du filtre.

3. Dispositif selon la revendication 1 ou 2, dans lequel le filtre (4) comporte en outre une ouverture supérieure (17) située sur une face supérieure du deuxième compartiment (6) et un couvercle supérieur (18) configuré pour obstruer l'ouverture supérieure (17) dans une position fermée, et les moyens de maintien (21) comportent une languette (23) montée sur l'élément filtrant (7) et s'étendant jusqu'au couvercle supérieur (18) lorsque le couvercle supérieur est en position fermée.

4. Dispositif selon la revendication précédentes, dans lequel le filtre (4) a une forme globalement pyramidale dont la base comprend l'ouverture supérieure (17).

5. Dispositif selon l'une des revendications 1 à 4, dans lequel le premier compartiment (5) est positionné au-dessous du deuxième compartiment (6).

6. Dispositif selon la revendication 5, dans lequel l'élément filtrant (7) est sensiblement parallèle au fond du premier compartiment (5).

7. Dispositif selon l'une des revendications 1 à 6, dans lequel l'élément filtrant (7) est sensiblement incliné par rapport au fond du premier compartiment (5).

8. Dispositif selon l'une des revendications 1 à 4, dans lequel l'élément filtrant (7) est sensiblement perpendiculaire au fond du premier compartiment (5).

9. Dispositif selon l'une des revendications précédentes, **caractérisé en ce que** le filtre (4) comporte une fenêtre de visualisation.

10. Dispositif selon la revendication 9, **caractérisé en ce que** la fenêtre de visualisation est située sur une paroi latérale du premier compartiment (5).

11. Système de filtration d'eau de pluie comprenant un dispositif selon l'une des revendications 1 à 10, et un réservoir (3) raccordé à ladite au moins une sortie (13) du filtre.

12. Système de filtration d'eau de pluie comprenant un réservoir (3) et un dispositif selon l'une des revendications 1 à 10 intégré au réservoir (3).
